(19) Europäisches Patentamt
European Patent Office
Office européen des brevets

(11) **EP 4 137 883 A1**

(12) **EUROPEAN PATENT APPLICATION**
published in accordance with Art. 153(4) EPC

(43) Date of publication:
**22.02.2023 Bulletin 2023/08**

(21) Application number: **21861907.0**

(22) Date of filing: **02.08.2021**

(51) International Patent Classification (IPC):
*G02F 1/1335* (2006.01)     *G02B 27/01* (2006.01)
*F21V 8/00* (2006.01)     *G02B 5/18* (2006.01)
*G02B 5/32* (2006.01)

(52) Cooperative Patent Classification (CPC):
**G02B 5/18; G02B 5/32; G02B 6/00; G02B 27/01;
G02F 1/1335**

(86) International application number:
**PCT/KR2021/010059**

(87) International publication number:
**WO 2022/045609 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2020 KR 20200107290**

(71) Applicant: **Lg Chem, Ltd.
Seoul 07336 (KR)**

(72) Inventors:
• **KIM, Jae Jin
  Daejeon 34122 (KR)**
• **SHIN, Bu Gon
  Daejeon 34122 (KR)**
• **JUNG, Bo Ra
  Daejeon 34122 (KR)**
• **HWANG, Hye Won
  Daejeon 34122 (KR)**
• **KWON, Do Kyeong
  Daejeon 34122 (KR)**

(74) Representative: **Hoffmann Eitle
Patent- und Rechtsanwälte PartmbB
Arabellastraße 30
81925 München (DE)**

(54) **COMPONENT FOR DISPLAY DEVICE, AND DISPLAY DEVICE USING SAME**

(57)     A display device display device capable of minimizing a light loss occurring due to photodiffraction by scattering, through a light scattering unit, light outputted by a light output unit in a given direction is provided. A part for the display device includes a light scattering unit configured to scatter light, and a light guide unit configured to expand the scattered light in a given direction. The light guide unit includes a light guide, a first optical element disposed on one surface or other surface of the light guide and a second optical element disposed on the one surface or the other surface of the light guide.

[Fig. 2]

**Description**

[Technical Field]

This application claims the benefit of the filing date of Korean Patent Application No. 10-2020-0107290 filed with the Korean Intellectual Property Office on August 25, 2020, the entire content of which is incorporated herein by reference. The present invention relates to a part for a display device and a display device using the same, and particularly, to a part for a display device, which can minimize a light loss occurring due to photodiffraction by scattering, through a light scattering unit, light outputted by a light output unit in a given direction, and a display device using the same.

[Background Art]

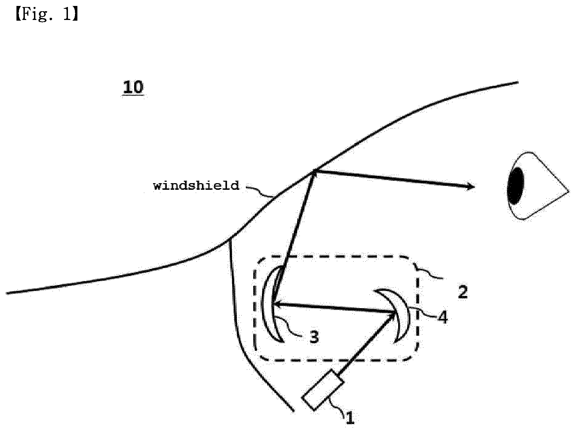

FIG. 1 is a diagram schematically illustrating a common head-up display (HUD) system for a vehicle.

The common HUD system 10 for a vehicle may include a display 1 for generating and outputting an image and an optical system 2 for directing the corresponding image toward the windshield of a vehicle.

The optical system 2 uses multiple mirrors 3 and 4, as illustrated in FIG. 1, in order to reduce a total volume of the HUD system 10 while securing a light path between the display 1 and the windshield.

However, although the multiple mirrors are used as described above, there are limitations in reducing the total volume of the HUD system 10 to a level of 10 L due to a distance that needs to be secured between the display 1 and the multiple mirrors 3 and 4.

In such an HUD system, from a standpoint of a driver, it is difficult to widely form an eye motion box (EMB), that is, an area in which an image may be viewed through the windshield. Therefore, the driver directly and inconveniently has to adjust angles of the multiple mirrors 3 and 4 so that an image can reach a limited range of the windshield in consideration of the axis of the pupil of the driver and a viewing angle of the image.

Furthermore, in order to solve such a problem, light is expanded in a one-dimensional way by using a light guide plate. However, there is a problem in that the EMB is not widely formed because incident light is not vertically expanded.

Accordingly, there is an urgent need to develop a technology for widely implementing the EMB by expanding light in the display device.

The aforementioned Background Art is technology information that had been owned by the inventor in order to derive embodiments of the present invention or was obtained in a process of deriving the embodiments, and may not be essentially said to be a known technology disclosed to the general public before an application for the embodiments of the present invention was filed.

[Disclosure]

[Technical Problem]

Various embodiments of the present invention provide a part for a display device, which can expand an eye motion box (EMB) and also minimize a light loss by minimizing diffraction for expanding light in a way to make the scattered light incident on a light guide unit for expanding the light in a given direction, and a display device using the same.

However, objects to be achieved by the present invention are not limited to the aforementioned object, and the other objects not described above may be evidently understood from the following description by those skilled in the art.

[Technical Solution]

An embodiment of the present invention provides a part for a display device, including a light scattering unit configured to scatter light and a light guide unit configured to expand the scattered the light in a given direction. The light guide unit includes a light guide configured to guide light, a first optical element disposed on one surface or the other surface of the light guide so that the scattered light is received and guided on the light guide, and configured to diffract the received light, and a second optical element disposed on the one surface or the other surface of the light guide and configured to receive the light diffracted by the first optical element and guided through the light guide, partially diffract the received light and output the diffracted light from the one surface or the other surface of the light guide.

According to an embodiment of the present invention, each of the first optical element and the second optical element may include a diffraction grid pattern in which a high refraction unit and a low refraction unit are alternately disposed in a first direction.

According to an embodiment of the present invention, the light scattering unit may be a diffuser configured to scatter the light at a given angle in the first direction.

According to an embodiment of the present invention, the light scattering unit may be a diffuser configured to scatter the light in a second direction which is a length direction of the diffraction grid pattern in a direction perpendicular to one surface of the first optical element.

According to an embodiment of the present invention, the light scattering unit may scatter the light at a maximum scattering angle of 0.5° to 3° in the first direction.

According to an embodiment of the present invention, the light scattering unit may scatter the light at a maximum scattering angle of 3° to 20° in the second direction.

According to an embodiment of the present invention, the light scattering unit may scatter the light in the first direction and the second direction. A maximum scattering angle of the light scattered in the first direction and a maximum scattering angle of the light scattered in the second direction may satisfy Equation 1 below.

[Equation 1]

3 ≤ the maximum scattering angle of the light scattered in the second direction / the maximum scattering angle of the light scattered in the first direction ≤ 10.

According to an embodiment of the present invention, light transmissivity of the light scattering unit may be more than 80% and less than 100%.

According to an embodiment of the present invention, the second optical element may be configured to increase diffraction efficiency by the diffraction grid pattern in the first direction.

According to an embodiment of the present invention, each of the first optical element and the second optical element may be any one selected from a holographic optical element and a diffraction optical element.

An embodiment of the present invention provides a display device including the part for a display device and a light output unit configured to output the light so that the light is radiated to the light scattering unit of the part for a display device.

According to an embodiment of the present invention, the light output unit may include a liquid crystal display panel or an organic light-emitting diode display panel.

According to an embodiment of the present invention, the area of a portion from which the light is outputted by the light output unit may be more than 1 cm$^2$ and less than 10 cm$^2$.

[Advantageous Effects]

The part for a display device and the display device using the same according to embodiments of the present invention can improve light efficiency because additional diffraction of incident light does not occur, and also expand the EMB of a display device by easily expanding incident light.

Effects of the present invention are not limited to the aforementioned effects, and effects not described above may be evidently understood from the specification of the present invention and the accompanying drawings by those skilled in the art.

[Description of Drawings]

FIG. 1 is a diagram schematically illustrating a common HUD system for a vehicle.

FIG. 2 is a diagram schematically illustrating a display device according to an embodiment of the present invention.

FIG. 3 is a graph illustrating power of light with respect to angles deviated from the center of the light outputted by a light output unit without a light scattering unit, and is a diagram schematically illustrating the light.

FIG. 4 is a graph illustrating power of light with respect to angles deviated from the center of the light that is outputted by the light output unit and passes through the light scattering unit, and is a diagram schematically illustrating the light.

FIG. 5 is a diagram schematically illustrating changes in the intensities of transmitted light and diffracted light depending on a direction of incident light and directions of diffraction grid patterns.

FIG. 6 is a diagram schematically illustrating changes in the intensities of transmitted light and diffracted light depending on a direction of incident light and directions of diffraction grid patterns according to a conventional art.

FIG. 7 is a diagram schematically illustrating light paths of a display device according to a comparison example and major polarization directions in the light paths.

FIG. 8 is a diagram schematically illustrating light paths of the display device according to an embodiment and major polarization directions in the light paths.

FIG. 9 is a diagram illustrating images of light outputted by the display device according to the comparison example and photographed at upper, middle and lower locations.

FIG. 10 is a diagram illustrating images of light outputted by the display device according to the embodiment and photographed at upper, middle and lower locations.

[Description of reference numerals]

| | |
|---|---|
| 100: display device | 100' : part for display device(130+150) |
| 110: light output unit | 130: light scattering unit |
| 150: light guide unit | 151: light guide |
| 153: first optical element | 153p: diffraction grid pattern of first optical element |
| 155: second optical element | 155p: diffraction grid pattern of second optical element |
| PB: incident light | TB: transmitted light |
| DB: diffracted light | |

[Best Mode for Invention]

The present invention will become evident with reference to embodiments to be described in detail later along with the accompanying drawings. However, the present invention is not limited to embodiments disclosed herein, and will be embodied in other various forms. The present embodiments are provided to merely complete the present invention and to allow a person having ordinary knowledge in the art to which the present invention pertains to fully understand the category of the present invention. The present invention is defined by only the category of the claims. Meanwhile, terms used in the present invention are for describing embodiments and are not intended to limit the present invention.

In the entire specification, the singular form, unless specially described otherwise in the context, also includes the plural form.

In the entire specification, "comprise" and/or "comprising" used herein means that a mentioned element, step, operation and/or device does not exclude the existence or addition of one or more other elements, steps, operations and/or devices, and may further include another element without excluding the another element unless specially described to the contrary.

In the entire specification, terms, such as "first" and "second", may be used to describe various elements, but the elements should not be restricted by the terms. The terms are used to only distinguish one element from the other element.

In the entire specification of the present invention, when it is described that one member is placed "on" the other member, this includes a case where one member adjoins the other member and a case where a third member is interposed between the two members.

In the entire specification of the present invention, "A and/or B" means "A and B or A or B."

In the entire specification, a term "light guide" may be defined as a structure that guides light therein by using internal total reflection. In a condition for the internal total reflection, a refractive index of a light guide needs to be greater than a refractive index of a surrounding medium adjacent to a surface of the light guide. The light guide may be formed to include a glass and/or plastic material, and may be transparent or semitransparent. The light guide may be formed in a plate type having various layouts. In this case, the term "plate" means a three-dimensional structure having a given thickness between one surface thereof and the other surface opposite to the one surface. Each of the one surface and the other surface may be a substantially flat plane, but at least one surface of the one surface and the other surface may be curved in a one-dimensional or two-dimensional way. For example, a plate type light guide may be curved in a one-dimensional way, and one surface and/or the other surface thereof may have a shape corresponding to a part of a side of a cylinder. However, it is preferred that curvature formed by the curve has a curvature radius large enough to facilitate internal total reflection in order to guide light in the light guide.

In the entire specification, a term "optical element" may have a light path changed by diffraction of light reaching the optical element. The optical element may be understood as a structure that is disposed in one surface or the other surface of the light guide and changes a light path by diffracting light in the light guide.

In the entire specification, a term "diffraction optical element" means an element that includes a diffraction grid pattern in which a high refraction unit and a low refraction unit are alternately disposed in a given direction, and may be defined as a structure that changes a light path by diffracting light on the light guide. In this case, the "diffraction optical element" may mean a portion in which a plurality of grid lines oriented in one direction on the light guide is arranged in a predetermined direction to form a given area with a pattern.

In the entire specification, a "length direction of a diffraction grid pattern" may be defined as a direction perpendicular to a direction in which the high refraction unit and the low refraction unit are alternately arranged.

In the entire specification, a "surface unevenness grid pattern" means a surface unevenness grid pattern in which the high refraction unit and the low refraction unit are alternately disposed in a given direction, and may be defined as a structure that changes a light path by diffracting light on the light guide. In this case, a "surface unevenness optical element" may mean a portion in which a plurality of surface unevenness grid lines oriented in one direction in the light guide is arranged in a predetermined direction to form a given area with a pattern.

In the entire specification, a term "surface unevenness grid line" may mean a protruding form (i.e., an embossing pattern) having a given height and formed on a surface of the light guide and/or a groove form (i.e., an engraved pattern) having a given depth and formed on a surface of the light guide. In this case, an orientation direction of the grid line may be freely designed so that a light path is changed into an intended direction through diffraction by the diffraction optical element. A pattern in which the plurality of surface unevenness grid lines is arranged may mean the "surface unevenness grid pattern."

In the entire specification, a term "holographic optical element" means a holographic grid pattern in which the high refraction unit and the low refraction unit are alternately disposed in a given direction. Light that reaches the holographic optical element is diffracted, and thus a light path of the holographic optical element may be changed. Such a holographic grid pattern may be recorded on a photosensitive material, such as a photopolymer, due to interference between a plurality of lasers. The holographic optical element may be understood as a structure that is disposed on one surface or the other surface of the light guide and changes a light path by diffracting light on the light guide.

In the entire specification, a "length direction of the holographic grid pattern" may be defined as a direction perpendicular to a direction in which the high refraction unit and the low refraction unit are alternately arranged.

In the entire specification, a term "diffraction efficiency" may mean a value obtained by dividing the amount of diffracted light whose light path is changed due to diffraction by the amount of light right before the diffraction, when the light subjected to internal total reflection on the light guide is partially diffracted by the optical element and thus a light path thereof may be changed, and the remainder of the light may be subjected to total reflection along the light path before being diffracted.

Hereinafter, the present invention is more specifically described.

An embodiment of the present invention provides a part 100' for a display device, including a light scattering unit 130 configured to scatter light and a light guide unit 150 configured to expand the scattered light in a given direction. The light guide unit 150 includes a light guide 151 configured to guide light, a first optical element 153 disposed on one surface or the other surface of the light guide so that the scattered light is received and guided on the light guide 151, and configured to diffract the inputted light, and a second optical element 155 disposed in one surface or the other surface of the light guide and configured to receive the light diffracted by the first optical element 153 and guided through the light guide 151, partially diffract the received light, and output the diffracted light from the one surface or the other surface of the light guide 151.

The part 100' for a display device according to an embodiment of the present invention can improve light efficiency because additional diffraction of incident light does not occur, and can also expand an eye motion box (EMB) of a display device 100 by easily expanding the incident light.

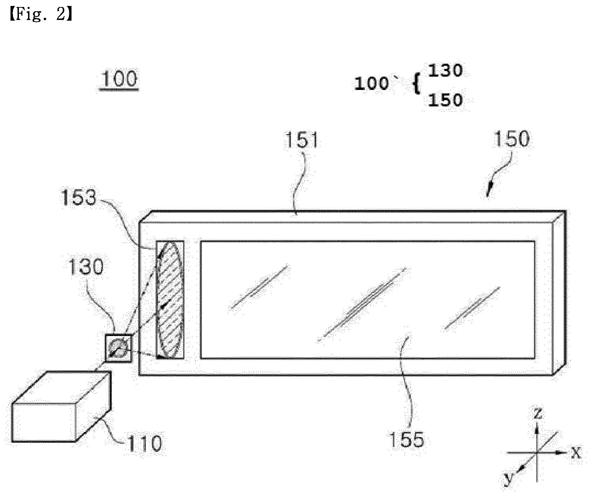

FIG. 2 is a diagram schematically illustrating the display device 100 according to an embodiment of the present invention. Referring to FIG. 2, the display device 100 according to an embodiment of the present invention includes a light output unit 110, the light scattering unit 130 and the light guide unit 150. The part 100' for a display device according to an embodiment of the present invention includes the light scattering unit 130 and the light guide unit 150. Moreover, the light guide unit 150 includes the light guide 151, the first optical element 153 and the second optical element 155. Since the part 100' for a display device includes the aforementioned elements as described above, the part 100' can improve efficiency of light outputted by the display device 100, and expand the EMB.

According to an embodiment of the present invention, the part 100' for a display device includes the light scattering unit 130 for scattering light. As described above, since the part 100'for a display device includes the light scattering unit 130 for scattering light outputted by the light output unit 110 to be described later, the part 100' can widely secure the EMB of the display device 100 by scattering the light outputted by the light output unit 110 in a given direction without reducing the amount of light, and improve light efficiency and play back an excellent image by minimizing diffraction for expanding the EMB in a given direction.

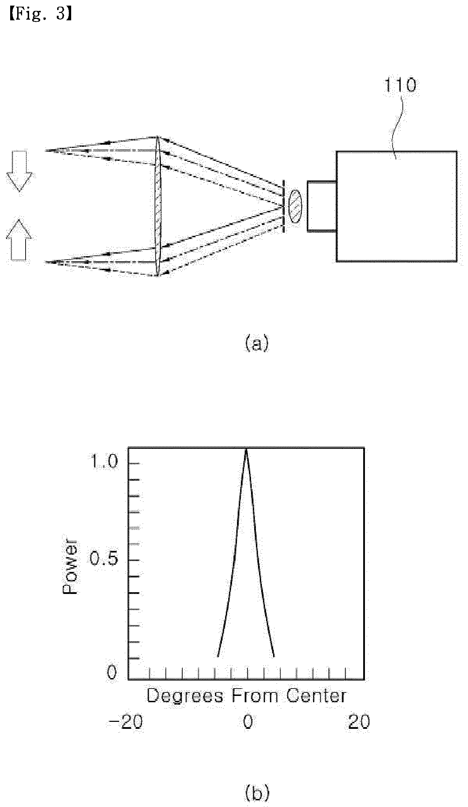

FIG. 3 is a graph illustrating power of light with respect to angles deviated from the center of the light outputted by the light output unit 110 without the light scattering unit 130, and is a diagram schematically illustrating the light. Referring to FIG. 3, as in FIG. 3(a), light outputted by the light output unit 110 does not pass through the light scattering unit 130. Accordingly, the outputted light is not scattered in any direction and has the strongest output at the central part of the light. Light output is rapidly reduced as the outputted light deviates from the central part. Likewise, as in the graph of FIG. 3(b), it may be expected that light output is rapidly reduced as the outputted light becomes distant from the center of the light.

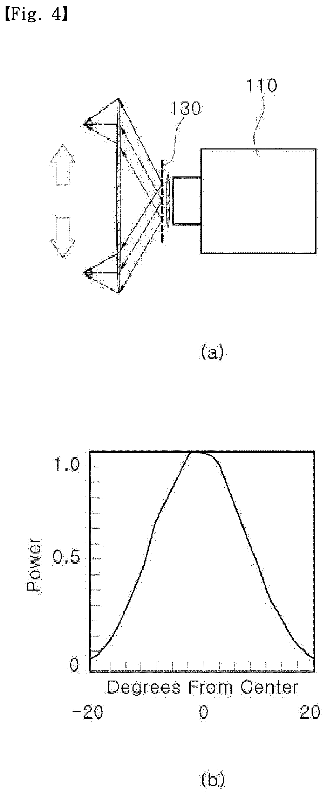

FIG. 4 is a graph illustrating power of light with respect to angles deviated from the center of the light that is outputted by the light output unit 110 and passes through the light scattering unit 130, and is a diagram schematically illustrating the light. Referring to FIG. 4, as in FIG. 4(a), light outputted by the light output unit 110 is scattered in a given direction after passing through the light scattering unit 130, and light output is maintained up to a location deviated from the central part of the light. Likewise, as in the graph of FIG. 4(b), it may be expected that the light output is maintained although the outputted light becomes distant from the center of the light.

According to an embodiment of the present invention, the part 100' for a display device includes the light guide unit 150 for expanding the scattered light in a given direction. Since the part 100' includes the light guide unit 150 as described above, the part 100' may receive, diffract and expand light scattered by the light scattering unit 130 in a given direction, thereby widely implementing the EMB of the display device 100.

According to an embodiment of the present invention, the light guide unit 150 includes: the light guide 151 for guiding light; the first optical element 153; and the second optical element 155. Since the light guide unit 150 includes the light guide 151, the first optical element 153 and the second optical element 155 as described above, the light guide unit 150 may receive and diffract the scattered light in a given direction. The light guide unit 150 may output some of the diffracted light to the outside of the light guide 151 by diffracting the diffracted light, and may transmit some of the diffracted light and expand light outputted by the light output unit 110.

According to an embodiment of the present invention, the light guide unit 150 includes the first optical element 153. The first optical element 153 may be disposed on one surface or the other surface of the light guide 151 so that light outputted by the light output unit 110 to be described later is received and guided on the light guide 151 after passing through the light scattering unit 130, and may be configured to diffract the inputted input light PB. Since the light guide unit 150 includes the first optical element 153 as described above, the light guide unit 150 can implement received light to be subjected to total reflection and guided by the light guide 151.

According to an embodiment of the present invention, the first optical element 153 may include a diffraction grid pattern 153p in which the high refraction unit and the low refraction unit are alternately disposed in a given direction. In this case, a direction in which the high refraction unit and low refraction unit of the first optical element 153 are alternately disposed is defined as a first direction, and may be an x-axis direction on the basis of FIG. 2. In this case, a length direction of the diffraction grid pattern 153p of the first optical element 153 may be a second direction perpendicular to the first direction, that is, a z-axis direction on the basis of FIG. 2.

According to an embodiment of the present invention, the light guide unit 150 includes the second optical element 155. The second optical element 155 may be implemented to receive guided light from the first optical element 153 and to expand light outputted by the light output unit 110 to be described later and widen the EMB of the display device 100 in a way to output some of the received light to the outside of the light guide 151 by diffracting the some of the received light and to expand the received light in a one-dimensional way by transmitting some of light that has not been diffracted.

Specifically, the second optical element 155 is configured to receive light L1 that is diffracted by the first optical element 153 and guided through the light guide 151, direct some of the received light L1 toward the other surface of the light guide 151 by diffraction, and enable the remainder of the received light L1 to be guided on the light guide 151 by total reflection along the existing light path. More specifically, the light L1 first received by the second optical element 155 is partially diffracted at each isolated point plural times at given intervals in a specific direction, for example, in the first direction, so that diffracted light L2 is outputted to the outside of the light guide 151 and the remaining light is subjected to total reflection and guided within the light guide 151 in the first direction. As a result, primary expansion can be performed.

According to an embodiment of the present invention, the second optical element 155 may include a diffraction grid pattern 155p in which the high refraction unit and the low refraction unit are alternately disposed in a given direction. In this case, a direction in which the high refraction unit and low refraction unit of the second optical element 155 are alternately disposed is defined as the first direction, and may be the x-axis direction on the basis of FIG. 2. In this case, a length direction of the diffraction grid pattern 155p of the second optical element 155 may be the second direction perpendicular to the first direction, that is, the z-axis direction on the basis of FIG. 2.

According to an embodiment of the present invention, the first optical element 153 and the second optical element 155 may include the diffraction grid patterns 153p and 155p, respectively, in each of which the high refraction unit and the low refraction unit are alternately disposed in the first direction. Since the diffraction grid patterns 153p and 155p are implemented in the same direction as described above, the output of incident light is not reduced, light efficiency of outputted light can be improved, and a degree of definition of an image played back by the display device 100 can be improved. More specifically, the first optical element 153 and the second optical element 155 may include the diffraction grid patterns 153p and 155p, respectively, in each of which the high refraction unit and the low refraction unit are alternately disposed in the first direction. As described above, the diffraction grid pattern 153p of the first optical element is implemented to include the diffraction grid pattern in which the high refraction unit and the low refraction unit are alternately disposed in the first direction. The diffraction grid pattern 155p of the second optical element is implemented to include the diffraction grid pattern in which the high refraction unit and the low refraction unit are alternately disposed in the first direction. Therefore, the amount of light outputted by the light output unit 110 to be described later can be prevented from being reduced.

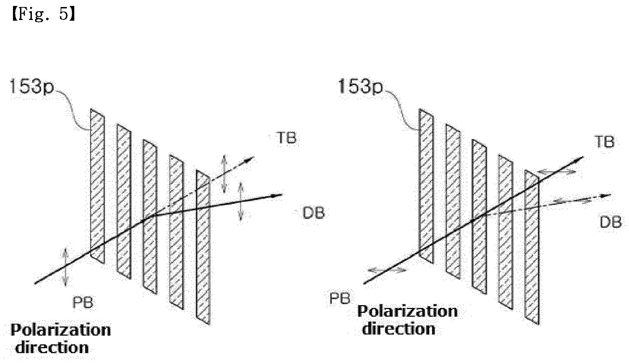

FIG. 5 is a diagram schematically illustrating changes in the intensities of transmitted light TB and diffracted light DB depending on a direction of incident light PB and directions of the diffraction grid patterns. Referring to FIG. 5, when light polarized in the first direction is radiated as the incident light PB, the amount of the diffracted light is implemented to be high, but the amount of the transmitted light is implemented to be low, while the light passes through the first optical element 153 in which the diffraction grid pattern 153p has been formed in the first direction. Accordingly, the amount of light outputted by the light output unit 110 can be maintained at a high level by setting a direction of the diffraction grid patterns 153p and 155p of both the first optical element 153 and the second optical element 155 as the first direction.

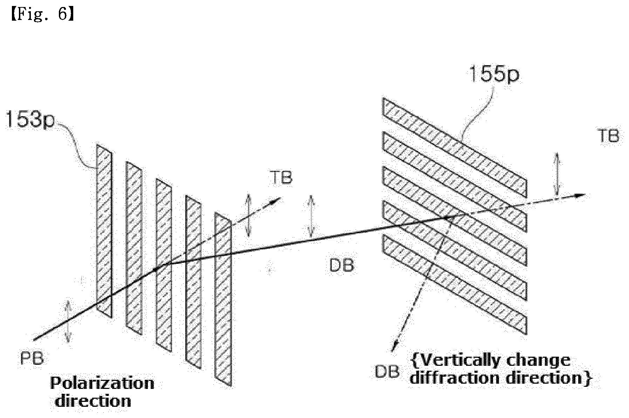

FIG. 6 is a diagram schematically illustrating changes in the intensities of transmitted light and diffracted light depending on a direction of incident light and directions of the diffraction grid patterns according to a conventional art. Referring to FIG. 6, when light polarized in the first direction is radiated as incident light PB, the amount of the diffracted light is implemented to be high, but the amount of the transmitted light is implemented to be low, while the light passes through the first optical element 153 in which the diffraction grid pattern 153p has been formed in the first direction. Thereafter, the diffracted light diffracted by the second optical element in which the diffraction grid pattern has been formed in the second direction is implemented to have a high intensity of transmitted light, and is implemented to have a low amount of diffracted light. As a result, the amount of light outputted by the light output unit 110 may be reduced.

According to an embodiment of the present invention, the light scattering unit 130 may be a diffuser which scatters light in a direction having a given angle to the first direction. Specifically, the light scattering unit 130 may be a diffuser which scatters light in the second direction having a given angle to the first direction. More specifically, the light scattering unit 130 may be a diffuser which scatters light in an oval. More specifically, the light scattering unit 130 may be a diffuser which scatters light in the second direction, that is, the length direction of the diffraction grid pattern, in a direction perpendicular to one surface of the first optical element. Since the light scattering unit 130 is selected as the diffuser which scatters light in a specific direction as described above, the EMB of an image played back by the display device 100 can be widely implemented.

In the entire specification, "light is scattered in a specific direction" may mean that light is scattered in a specific direction on a surface perpendicular to a direction in which the light is radiated. Specifically, referring to FIG. 2, light radiated by the light output unit 110 is incident onto the light scattering unit 130. The incident light is scattered by the light scattering unit 130. An extended direction of the light radiated by the light output unit 110 may be defined as a direction in which the scattered light is radiated. A specific direction in which light is scattered while forming an angle to the direction in which the scattered light is radiated and is scattered on the light guide 151, that is, on a surface of the first optical element 153, may be defined as "light is scattered in a specific direction."

In the entire specification, "light is scattered in the specific direction" may mean that light is scattered in an area in a way that the light is scattered as much as possible in the specific direction and weakly scattered in the other directions.

According to an embodiment of the present invention, the light scattering unit 130 may scatter light at a maximum scattering angle of 0.5° to 3° in the first direction. Specifically, the light scattering unit 130 may scatter light, outputted by the light output unit 110 and radiated to the light scattering unit 130, at a maximum scattering angle of more than 0.7° and less than 2.7°, more than 1.0° and less than 2.5°, or more than 1.5° and less than 2.0° in the first direction. The size of an image to be expanded can be adjusted and a degree of definition thereof can be improved by adjusting a maximum scattering angle of light, outputted by the light output unit 110 and radiated by the light scattering unit 130, in the aforementioned range.

In the entire specification, a "maximum scattering angle" may mean an angle formed by light that is isolated from a direction in which light is radiated as much as possible and scattered, among scattered light, when light is scattered while forming an angle in the direction in which the light is radiated.

According to an embodiment of the present invention, the light scattering unit 130 may scatter light at a maximum scattering angle of 3° to 20° in the second direction. Specifically, the light scattering unit 130 may scatter the light at a maximum scattering angle of more than 4° and less than 19°, more than 5° and less than 18°, more than 6° and less than 17°, more than 7° and less than 16°, more than 8° and less than 15°, more than 9° and less than 14°, more than 10° and less than 13°, or more than 11° and less than 12° in the second direction. The size of an image to be expanded can be adjusted and a degree of definition thereof can be improved by adjusting a maximum scattering angle of light, outputted by the light output unit 110 and radiated by the light scattering unit 130, in the aforementioned range.

According to an embodiment of the present invention, the light scattering unit 130 scatters light in the first direction and the second direction. A maximum scattering angle of the light scattered in the first direction and a maximum scattering angle of the light scattered in the second direction may satisfy Equation 1 below. Specifically, the light scattering unit 130 scatters light, outputted by the light output unit 110 to be described later and radiated to the light scattering unit 130, in the first direction and the second direction. A maximum scattering angle of the light scattered in the first direction and a maximum scattering angle of the light scattered in the second direction may satisfy Equation 1 below.

[Equation 1]

$$3 \leq \text{the maximum scattering angle of the light scattered in the second direction} / \text{the maximum scattering angle of the light scattered in first direction} \leq 10$$

Specifically, the value in Equation 1 may be 4 or more to 9 or less, 5 or more to 8 or less, or 6 or more to 7 or less. The size of an image to be expanded can be adjusted and a degree of definition thereof can be improved by adjusting the value in Equation 1 in the aforementioned range.

According to an embodiment of the present invention, light transmissivity of the light scattering unit 130 may be more than 80% and less than 100%. Specifically, light transmissivity of the light scattering unit 130 may be more than 82% and less than 98%, more than 84% and less than 96%, more than 86% and less than 94%, or more than 88% and less than 92%. Brightness of light played back by the display device 100 can be improved by adjusting light transmissivity of the light scattering unit 130 in the aforementioned range.

According to an embodiment of the present invention, the second optical element 155 may be configured to increase diffraction efficiency by the diffraction grid pattern in the first direction.

According to an embodiment of the present invention, it is preferred that the second optical element 155 is configured to gradually increase diffraction efficiency by the diffraction grid pattern in the first direction. Efficiency by the diffraction grid pattern of the second optical element may be configured to gradually increase between 10% and 100%. The light L1 received by the second optical element 155 from the first optical element 153 is subjected to total reflection in a direction having, as a main direction, the first direction in which the diffraction grid pattern is disposed on the light guide 151. Some of the light L2 is branched along with diffraction on the total reflection path by the diffraction grid pattern, so that a light path is formed in a direction in which light is outputted by the light guide 151. As a result, the amount of light is reduced along the total reflection path having the first direction as the main direction. Accordingly, although the amount of light reaching the diffraction grid pattern is reduced along the total reflection path, if the second optical element 155 is configured to increase diffraction efficiency in the first direction, the amounts of pieces of the light L2 diffracted by the diffraction grid pattern 155p of the second optical element 155 and outputted by the light guide 151 may become similar.

According to an embodiment of the present invention, each of the first optical element 153 and the second optical element 155 may be any one selected from a holographic optical element and a surface unevenness optical element. Specifically, both the first optical element 153 and the second optical element 155 may be holographic optical elements or surface unevenness optical elements. Furthermore, one of the first optical element 153 and the second optical element 155 may be a holographic optical element, and the other thereof may be a surface unevenness optical element. Proper diffraction efficiency can be implemented depending on a situation of an implemented display device by selecting the first optical element 153 and the second optical element 155 as described above.

An embodiment of the present invention provides the display device 100 including: the part 100' for a display device; and the light output unit 110 for outputting light so that the light is radiated to the light scattering unit 130 of the part 100'for a display device.

The display device 100 according to an embodiment of the present invention can improve light efficiency because additional diffraction of incident light does not occur, and can also expand the eye motion box (EMB) of the display device 100 by easily expanding the incident light.

According to an embodiment of the present invention, the light output unit 110 radiates outputted light to the light scattering unit 130. Since light radiated by the light output unit 110 is scattered by the light scattering unit 130 as described above, the display device can require no additional optical element for expanding light in a specific direction.

According to an embodiment of the present invention, the display device 100 includes the light output unit 110 for outputting light. Since the display device 100 includes the light output unit 110 as described above, the display device 100 can output a predetermined image at a given location by radiating the image in a light form. Moreover, if the display device 100 corresponds to a head-up display (HUD) for a vehicle, the display device 100 can play back an image on the windshield.

According to an embodiment of the present invention, the light output unit 110 may include a liquid crystal display (LCD) panel or an organic light-emitting diode (OLED) display panel. Specifically, the light output unit 110 may be an LCD panel or a display panel including OLEDs (hereinafter referred to as an organic light-emitting display panel) or a laser beam scan projector. More specifically, the light output unit 110 means means for receiving an electrical signal having image information and outputting image display light for the image information. A moving image as well as a still image can be played back and the picture quality of an image played back can be improved by selecting the light output unit 110 as an LCD panel or an OLED display panel as described above.

According to an embodiment of the present invention, the area of a portion from which light is outputted by the light output unit 110 may be more than 1 cm$^2$ and less than 10 cm$^2$. Specifically, the area of the portion from which light is outputted by the light output unit 110 may be more than 2 cm$^2$ and less than 9 cm$^2$, more than 3 cm$^2$ and less than 8 cm$^2$, more than 4 cm$^2$ and less than 7 cm$^2$, or more than 5 cm$^2$ and less than 6 cm$^2$. The picture quality of the image played back can be improved by adjusting the area of a portion, from which light is outputted, in the aforementioned range.

[Detailed Description]

Hereinafter, examples are described in detail in order to describe the present invention in detail. However, examples according to the present invention may be modified in various other forms, and the scope of the present invention is interpreted as being limited to the following examples. The examples of this specification are provided to more fully explain the present invention to a person having ordinary knowledge in the art.

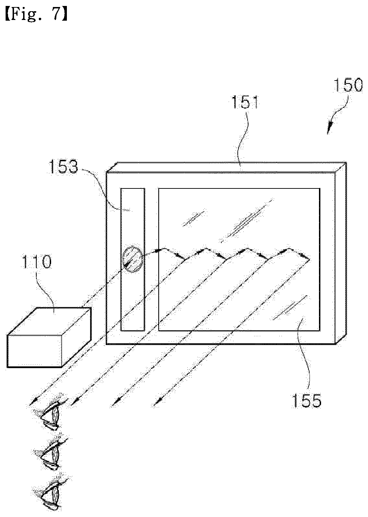

FIG. 7 is a diagram schematically illustrating light paths of a display device according to a comparison example and major polarization directions in the light paths. Referring to FIG. 7, the display device does not include the light scattering unit 130, and light L is outputted by the light output unit 110. Thereafter, the light L is incident onto the first optical element 153, subjected to total reflection on the light guide 151, and received by the second optical element 155. The received light L1 is diffracted by the second optical element 155 and expanded in a one-dimensional way, and thus light L2 is outputted by the light guide 151.

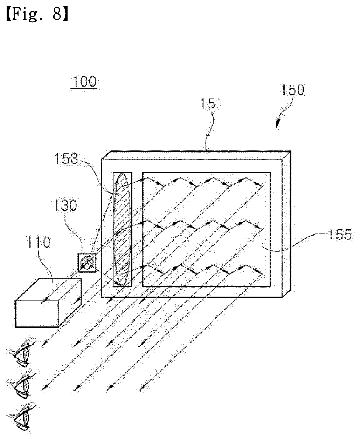

FIG. 8 is a diagram schematically illustrating light paths of the display device 100 according to an example and major polarization directions in the light paths. Referring to FIG. 8, light L is outputted by the light output unit 110 and passes through the light scattering unit 130. Thereafter, the light L is incident onto the first optical element 153, subjected to total reflection on the light guide 151, and received by the second optical element 155. The received light L1 is diffracted by the second optical element 155 and expanded in a one-dimensional way, and thus light L2 is outputted by the light guide.

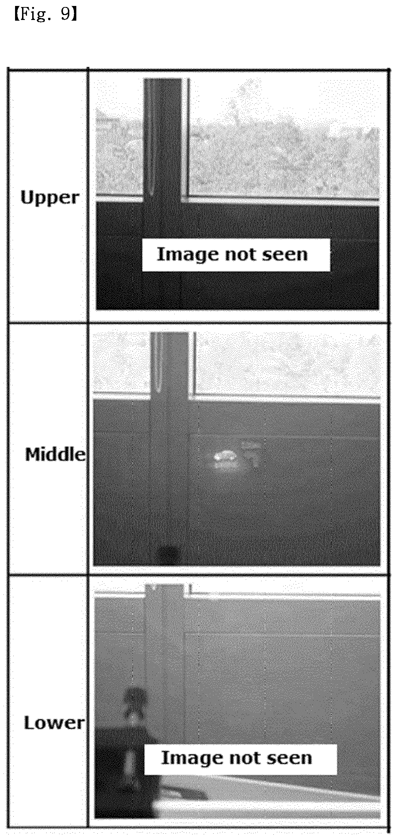

FIG. 9 is a diagram illustrating images of light outputted by the display device according to the comparison example and photographed at upper, middle and lower locations. Referring to FIG. 9, it can be seen that an image of light photographed at the middle location is clear, but images of light photographed at the upper or lower locations are not seen, that is, light was not expanded in the first direction.

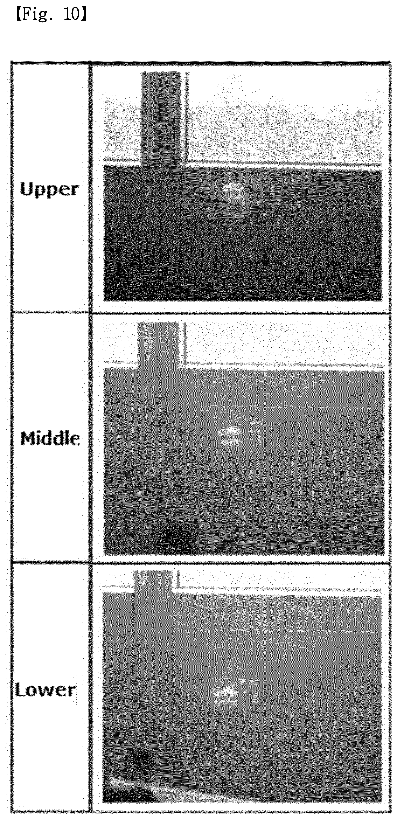

FIG. 10 is a diagram illustrating images of light outputted by the display device 100 according to the example and photographed at upper, middle and lower locations. Referring to FIG. 10, it can be seen that images can be seen in all of upper, middle and lower locations. Accordingly, it can be seen that light outputted by the light output unit 110 was expanded in the first direction.

Accordingly, the part 100' for a display device and the display device 100 using the same according to the present invention can implement the expansion of light of the display device 100 without reducing the amount of light by expanding light of the light output unit 110 in the first direction through the light scattering unit 130.

Although the present invention has been described above in connection with the limited embodiments and drawings, the present invention is not limited to the embodiments. A person having ordinary skill in the art to which the present invention pertains may modify and change the present invention within the technical spirit of the present invention and the equivalent range of the following claims.

**Claims**

1. A part for a display device, comprising:

    a light scattering unit configured to scatter light, and
    a light guide unit configured to expand the scattered light in a given direction,
    wherein the light guide unit comprises:

        a light guide configured to guide the light;
        a first optical element disposed on one surface or other surface of the light guide so that the scattered light is received and guided on the light guide, and configured to diffract the received light; and
        a second optical element disposed on the one surface or the other surface of the light guide and configured to receive the light diffracted by the first optical element and guided through the light guide, partially diffract the received light and output the diffracted light from the one surface or the other surface of the light guide.

2. The part of claim 1, wherein each of the first optical element and the second optical element comprises a diffraction grid pattern in which a high refraction unit and a low refraction unit are alternately disposed in a first direction.

3. The part of claim 2, wherein the light scattering unit is a diffuser configured to scatter the light at a given angle in the first direction.

4. The part of claim 2, wherein the light scattering unit is a diffuser configured to scatter the light in a second direction which is a length direction of the diffraction grid pattern in a direction perpendicular to the one surface of the first optical element.

5. The part of claim 4, wherein the light scattering unit scatters the light at a maximum scattering angle of 0.5°to 3°in the first direction.

6. The part of claim 4, wherein the light scattering unit scatters the light at a maximum scattering angle of 3° to 20° in the second direction.

7. The part of claim 4, wherein the light scattering unit scatters the light in the first direction and the second direction, and a maximum scattering angle of the light scattered in the first direction and a maximum scattering angle of the light scattered in the second direction satisfy Equation 1 below:

[Equation 1]

$$3 \leq \text{the maximum scattering angle of the light scattered in the second direction} / \text{the maximum scattering angle of the light scattered in the first direction} \leq 10.$$

8. The part of claim 1, wherein light transmissivity of the light scattering unit is more than 80% and less than 100%.

9. The part of claim 2, wherein the second optical element is configured to increase diffraction efficiency by the diffraction grid pattern in the first direction.

10. The part of claim 1, wherein each of the first optical element and the second optical element is a holographic optical element or a diffraction optical element.

11. A display device comprising:

the part for the display device according to any one of claims 1 to 10; and
a light output unit configured to output light so that the light is radiated to the light scattering unit of the part for the display device.

12. The display device of claim 11, wherein the light output unit comprises a liquid crystal display panel or an organic light-emitting diode display panel.

13. The display device of claim 11, wherein an area of a portion from which the light is outputted by the light output unit is more than 1 cm$^2$ and less than 10 cm$^2$.

【Fig. 1】

10

windshield

2

4

3

1

【Fig. 2】

【Fig. 3】

(a)

(b)

【Fig. 4】

(a)

(b)

【Fig. 5】

【Fig. 6】

【Fig. 7】

EP 4 137 883 A1

【Fig. 8】

18

【Fig. 9】

| | |
|---|---|
| Upper | |
| Middle | |
| Lower | |

【Fig. 10】

<div align="center">

## INTERNATIONAL SEARCH REPORT

</div>

| International application No. |
| --- |
| **PCT/KR2021/010059** |

| A. | CLASSIFICATION OF SUBJECT MATTER |
| --- | --- |
| | **G02F 1/1335**(2006.01)i; **G02B 27/01**(2006.01)i; **F21V 8/00**(2006.01)i; **G02B 5/18**(2006.01)i; **G02B 5/32**(2006.01)i |

According to International Patent Classification (IPC) or to both national classification and IPC

| B. | FIELDS SEARCHED |
| --- | --- |

Minimum documentation searched (classification system followed by classification symbols)

G02F 1/1335(2006.01); F21V 8/00(2006.01); G02B 27/00(2006.01); G02B 27/01(2006.01); G02B 27/02(2006.01); G02B 5/32(2006.01); G02F 1/1334(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디스플레이 장치(display device), 광산란부(light scattering member), 광도광부(light guiding member), 광학소자(optical element), 회절(diffraction), 각도(angle)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0108420 A (LG CHEM, LTD.) 24 September 2019 (2019-09-24)<br>See paragraphs [0041]-[0050]; and figure 4. | 1-13 |
| Y | KR 10-2020-0007965 A (SEEREAL TECHNOLOGIES S.A.) 22 January 2020 (2020-01-22)<br>See paragraphs [0134]-[0140]; and figures 4a-4d. | 1-13 |
| A | US 2017-0052374 A1 (WALDERN, Jonathan David et al.) 23 February 2017 (2017-02-23)<br>See paragraph [0120]; and figures 26A-26B. | 1-13 |
| A | EP 1068548 B1 (ELOP ELECTRO-OPTICS INDUSTRIES LTD. et al.) 12 November 2003 (2003-11-12)<br>See paragraphs [0013]-[0023]; and figures 1-5. | 1-13 |
| A | US 2020-0200963 A1 (LUMUS LTD.) 25 June 2020 (2020-06-25)<br>See paragraph [0052]; and figure 2A. | 1-13 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 November 2021** | **08 November 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| International application No. |
| --- |
| **PCT/KR2021/010059** |

| Patent document cited in search report | | | Publication date (day/month/year) | Patent family member(s) | | | Publication date (day/month/year) |
| --- | --- | --- | --- | --- | --- | --- | --- |
| KR | 10-2019-0108420 | A | 24 September 2019 | None | | | |
| KR | 10-2020-0007965 | A | 22 January 2020 | CN | 110998413 | A | 10 April 2020 |
| | | | | DE | 112018002581 | A5 | 19 March 2020 |
| | | | | JP | 2020-521170 | A | 16 July 2020 |
| | | | | US | 2020-0183079 | A1 | 11 June 2020 |
| | | | | WO | 2018-211074 | A1 | 22 November 2018 |
| US | 2017-0052374 | A1 | 23 February 2017 | US | 10678053 | B2 | 09 June 2020 |
| | | | | US | 2013-0101253 | A1 | 25 April 2013 |
| | | | | US | 2015-0160529 | A1 | 11 June 2015 |
| | | | | US | 2020-0249484 | A1 | 06 August 2020 |
| | | | | US | 8639072 | B2 | 28 January 2014 |
| | | | | US | 9335604 | B2 | 10 May 2016 |
| | | | | WO | 2010-125337 | A2 | 04 November 2010 |
| | | | | WO | 2010-125337 | A3 | 23 December 2010 |
| EP | 1068548 | B1 | 12 November 2003 | AT | 254291 | T | 15 November 2003 |
| | | | | AU | 1999-30524 | A1 | 25 October 1999 |
| | | | | CA | 2326767 | A1 | 14 October 1999 |
| | | | | CA | 2326767 | C | 23 June 2009 |
| | | | | DE | 69912759 | T2 | 30 September 2004 |
| | | | | EP | 1068548 | A1 | 17 January 2001 |
| | | | | IL | 123936 | A | 26 November 1998 |
| | | | | IL | 138657 | D0 | 31 October 2001 |
| | | | | US | 6580529 | B1 | 17 June 2003 |
| | | | | WO | 99-52002 | A1 | 14 October 1999 |
| US | 2020-0200963 | A1 | 25 June 2020 | AU | 2019-335612 | A1 | 08 April 2021 |
| | | | | AU | 2019-335612 | A2 | 22 April 2021 |
| | | | | BR | 112021004307 | A2 | 25 May 2021 |
| | | | | CA | 3111598 | A1 | 12 March 2020 |
| | | | | CN | 112639574 | A | 09 April 2021 |
| | | | | EP | 3847500 | A1 | 14 July 2021 |
| | | | | IL | 281242 | D0 | 29 April 2021 |
| | | | | KR | 10-2021-0054562 | A | 13 May 2021 |
| | | | | TW | 202024695 | A | 01 July 2020 |
| | | | | US | 10739512 | B2 | 11 August 2020 |
| | | | | US | 2021-0247608 | A1 | 12 August 2021 |
| | | | | WO | 2020-049542 | A1 | 12 March 2020 |

Form PCT/ISA/210 (patent family annex) (July 2019)

**EP 4 137 883 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200107290